# EUROPÄISCHE PATENTSCHRIFT

(11) **EP 1 403 677 B1**
(45) Veröffentlichungstag und Bekanntmachung des Hinweises auf die Patenterteilung: **31.05.2006**
(21) Anmeldenummer: 03018979.9
(22) Anmeldetag: 21.08.2003
(51) Int. Cl.: G02B 23/04

(54) **Beobachtungssystem mit Fernglas mit Bildsensor für eine Bildaufzeichnungsfunktion**
Observation system with binoculars with image sensor for an image recording functionality
Système d'observation avec binoculaire avec capteur d'image pour l'enregistrement d'image

(30) Priorität: 28.09.2002 DE 10245395
(43) Veröffentlichungstag der Anmeldung: 31.03.2004
(73) Patentinhaber: Hensoldt AG, 35576 Wetzlar (DE)
(72) Erfinder: Heintz, Christof, Dipl.-Ing., 61440 Oberursel (DE)
(74) Vertreter: Lorenz, Werner

(56) Entgegenhaltungen:
- EP-A- 0 860 982
- EP-A- 1 235 095
- WO-A-01/71407
- US-A1- 2002 021 903

## Beschreibung

Die Erfindung betrifft ein Fernglas mit Abbildungsfunktion.

Ein allgemein bekanntes Fernglas dient zur Beobachtung von Objekten durch einen Beobachter. Seit geraumer Zeit sind Ferngläser bekannt, die imstande sind, ein betrachtetes Bild durch ein Fernglas aufzuzeichnen.

Beispielsweise zeigt die JP 11064740 ein Fernglas mit einer Aufzeichnungs- und Wiedergabeeinrichtung. Das Fernglas besitzt einen Aufbau, bei dem ein Strahlenteilerwürfel in einem Strahlengang angeordnet ist, um ein Teillichtbündel auszukoppeln, wobei das ausgekoppelte Teillichtbündel zu einem Abbildungssystem geführt wird, um dort innerhalb des Fernglases ein Bild zu erzeugen. Nachteilig an dieser Konstruktion ist, dass eine Digitalkamera direkt im Fernglas integriert ist und somit das Fernglas ein nachteilig hohes Gewicht aufweist.

Die US 5,963,369 beschreibt ein stereoskopisches Bildsystem, welches mit einem traditionellen Fernglas verbunden ist. Jeder Tubus enthält einen Strahlenteilerwürfel, welcher zwischen einem Objektiv und einem Okular zur Aufsplittung des Lichts angeordnet ist. Weiterhin wird ein Bildsensor verwendet, welcher außerhalb des Strahlenganges angeordnet ist. Dieser wandelt die Bilder in ein elektronisches Signal um. Ein Signalempfänger, welcher ebenfalls außerhalb des Strahlenganges angeordnet ist, wandelt die elektronischen Signale in Bilder um. Ebenfalls ist eine Speichereinheit vorhanden, die die aufgenommenen Signale speichert, damit beispielsweise auf einem PC-Monitor, mit Hilfe einer polarisierenden Brille, der Beobachter die Bilder unter Stereopsis betrachten kann.

Da eine Betrachtung der aufgenommenen Bilder nicht sofort nach Beobachten des Objektes durch das Fernglas vorgenommen werden kann, ist diese Methode zur Aufzeichnung von Bildern relativ aufwändig. Des weiteren müssen spezielle Speichereinheiten zur Aufnahme der Daten vorliegen.

Aus der DE 101 158 54 Al ist ebenfalls ein Fernglas mit einer Abbildungsfunktion bekannt. Das Fernglas enthält optische Beobachtungssysteme zum Betrachten eines Objekts und einer Abbildungseinrichtung zum Aufnehmen eines Bildes. Weiterhin umfasst das Fernglas eine fotoelektrische Wandlereinheit zum Umwandeln eines von dem optischen Abbildungssystem enthaltenen Bildes in ein elektrisches Signal.

Dem gemäß ist es Aufgabe der Erfindung, ein binokulares Fernglas mit einer Abbildungsfunktion zu schaffen, das die Nachteile des Standes der Technik löst, insbesondere eine digitale Aufzeichnung eines durch das Fernglas gesehenen Bildes mittels Auskopplung eines optischen Signals und eine zeitnahe Betrachtung des aufgenommenen Bildes ermöglicht, wobei ein geringes Gewicht des Fernglases erzielt werden soll.

Diese Aufgabe wird erfindungsgemäß durch ein Fernglas mit Abbildungsfunktion gelöst, wie in Anspruch 1 definiert ist.

Das Fernglas beinhaltet neben den üblichen optischen Komponenten wie Objektiv, Okular und Prismensystem zur Bildaufrichtung ebenfalls eine Einrichtung zur Auskopplung eines Teillichtbündels, wobei die Einrichtung in vorteilhafterweise als Strahlenteilerwürfel oder als Teilerspiegel ausgebildet sein kann. Die Auskopplung eines Teillichtbündels erfolgt nach der in der JP 11064740 beschriebenen Auskopplungsmethode, wobei die Einrichtung zur Auskopplung zwischen dem Objektiv und dem Okular angeordnet ist. Das im Strahlenteilerwürfel ausgekoppelte Teillichtbündel trifft auf den Bildsensor des Moduls. Das Modul wandelt danach die Bilder in digitale Daten um, wobei die Daten in vorteilhafter Weise über ein Kabel in die Digitalkamera übertragen werden.

Der wesentliche Vorteil der Ausführungsform dieses Fernglases ist, dass eine herkömmliche, dem Stand der Technik entsprechende Digitalkamera, welche eine Schnittstelle für einen zweiten Bildsensor aufweist, für das Aufzeichnen von Objekten verwendet werden kann. Die Digitalkamera ist eine eigenständige Kamera, mit welcher auch ohne eine Verbindung zum Fernglas Aufnahmen eines Objektes durchgeführt werden können. Durch das relativ kleine Zusatzgewicht des Moduls am Fernglas, kann ein leichtes und kompaktes Fernglas realisiert werden.

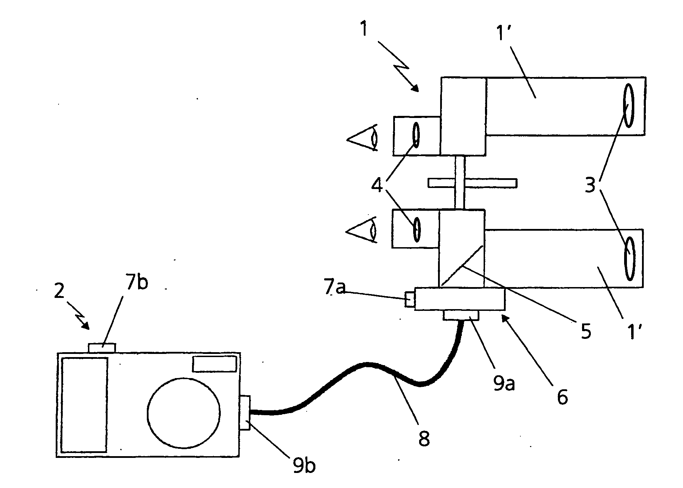

Vorteilhafte Ausgestaltungen und Weiterbildungen ergeben sich aus den Unteransprüchen und dem nachfolgend anhand der Zeichnung prinzipmäßig beschriebenen Ausführungsbeispiel.

Die einzige Figur der Zeichnung zeigt ein Fernglas 1 und eine Digitalkamera 2, wobei nur die für die Erfindung wichtigsten Teile bzw. Elemente gekennzeichnet sind.

Das Fernglas beinhaltet jeweils zwei optische Systeme, wobei jedes System aus einem Objektiv 3, einem Okular 4, einem Prismensystem zur Bildaufrichtung, welches nicht dargestellt ist, und einer Einrichtung 5 zur Auskopplung eines Teillichtbündels besteht. Die Auskopplung des Teillichtbündels kann nach den Verfahren, welche in der JP 11064740 oder in der US 5,963,369 beschrieben sind, geschehen. An einer Außenseite des Fernglases 1 ist ein Modul 6 mit einem nicht dargestellten Bildsensor angebracht. Das Modul 6 ist weiterhin mit einem Auslöseknopf 7a versehen. Über ein Kabel 8 ist das Modul 6 mit der Digitalkamera 2 verbunden. An der Digitalkamera 2 befindet sich ebenfalls ein Auslöseknopf 7b.

Das Modul 6 beinhaltet außerdem einen mechanischen Shutter, der als Verschluss und als Blendeneinstellung fungiert (hier nicht dargestellt). Des weiteren sind Linsen in dem Modul 6 integriert, um eine Anpassung des Bildfeldes an die Größe des Chips zu erreichen und eine manuelle synchrone Fokussierung des Bildes auf dem Bildsensor zu gewährleisten (nicht dargestellt). Außerdem ist eine Elektronik vorgesehen, die den Auslöseknopf 7a und den Bildsensor, welcher in dem Modul 6 integriert ist, abfragt, die Belichtungszeit regelt, den Shutter bedient und das digitale Bildsignal an die Digitalkamera 2 sendet. Zur Übertragung der Daten steht ein Kabel 8 zur Verfügung. Verschiedene digitale Schnittstellen-/Übertragungstechnologien, wie RS 232, USB, IEC 1394, stehen für die Übertragung der Daten zur Verfügung, wobei im vorliegenden Ausführungsbeispiel das USB-Bussystem verwendet wird. Es wäre auch möglich diverse drahtlose Technologien, wie beispielsweise Bluetooth oder IEC 802.11b zu verwenden. Das Kabel 8 enthält Adern zum Übertragen des digitalen Bildsignals und dient gleichzeitig als Spannungsversorgung des Moduls 6. Dafür könnten in einem weiteren Ausführungsbeispiel auch zwei separate Kabel vorgesehen sein. Alternativ könnte das Modul 6 auch mit eigenen Batterie betrieben werden.

Da das Modul 6 relativ klein und kompakt an dem Gehäuse des Fernglases 1 befestigt ist, bleibt ein leichtes und kompaktes Fernglas bestehen.

Das Modul 6 ist zu Reparaturzwecken oder zur Aufrüstung durch bessere Bildsensoren austauschbar bzw. abnehmbar ausgeführt.

Das Modul 6 und die Digitalkamera 2 weisen Anschlüsse 9a und 9b auf .

Beim Beobachten bzw. zum Aufnehmen eines Objektes wird das Kabel 8 in die Anschlüsse 9a und 9b des Moduls 6 und der Digitalkamera 2 eingesteckt. Vorteilhafter Weise schaltet die Digitalkamera 2 dann automatisch auf den externen Sensor 6 um. Des weiteren besteht die Möglichkeit über eine Menüauswahl der Digitalkamera 2 zwischen den Bildsensoren umzuschalten.

Zur Darstellung des Bildes ist in diesem Ausführungsbeispiel kein motorischer Autofokus vorgesehen. Dieser kann aber selbstverständlich in das Modul 6 integriert werden. Weiterhin beruht das Ausführungsbeispiel auf einer mechanischen Verschiebung der optischen Elemente des Fernglases 1 vor dem Bildsensor im Modul 6, die synchron mit der Fokussierung des Fernglases 1 durch den Benutzer erfolgt.

Die Auswertung des Bildsensors 6 wird mit der Elektronik durchgeführt, die für den internen Bildsensor der Digitalkamera 2 vorgesehen ist. Somit stehen alle Möglichkeiten offen, die heutzutage mit Digitalkameras durchgeführt werden, insbesondere Einzelbilder, Serienbilder, Videos oder ähnliche Aufnahmen.

Für Tonaufnahmen wäre in einem anderen Ausführungsbeispiel eine Integration eines Mikrofons im Modul 6 möglich.

## Patentansprüche

1. Beobachtungssystem mit Bildaufzeichnungsfunktion, umfassend:
1.1. ein Fernglas mit
1.1.1. Fernglastuben (1'), wobei jeder Fernglastubus (1') einen Strahlengang durch ein Objektiv (3) und ein Okular (4) aufweist;
1.1.2. einer Einrichtung (5) zur Auskopplung eines Teillichtstrahles, welche in einem der Fernglastuben (1') angeordnet ist; und
1.1.3. einem austauschbaren und/oder abnehmbaren Modul (6) mit einem Bildsensor zur Umwandlung von Bildern in digitale Daten, welches derart an einem Gehäuse des Fernglastubuses (1'), welcher die Einrichtung (5) zur Auskopplung des Teillichtstrahles enthält, angebracht ist, dass eine Auskopplung eines optischen Signals auf den Bildsensor möglich ist; und
1.2. eine autarke Digitalkamera (2) mit einer Schnittstelle für einen zusätzlichen externen Bildsensor, wobei
1.3. das Modul (6) mit der Schnittstelle der Digitalkamera (2) derart verbunden ist, dass digitale Bildinformationen über die Verbindung übertragbar sind und der Bildsensor des Moduls als zusätzlicher externer Bildsensor der Digitalkamera (2) einsetzbar ist.

2. Beobachtungssystem mit Bildaufzeichnungsfunktion nach Anspruch 1, **dadurch gekennzeichnet, dass** das Modul (6) mit der Schnittstelle der Digitalkamera (2) über ein Kabel (8) verbunden ist.

3. Beobachtungssystem mit Bildaufzeichnungsfunktion nach Anspruch 2, **dadurch gekennzeichnet, dass** die Schnittstelle als USB, RS 232 oder IEC 1394 ausgebildet ist.

4. Beobachtungssystem mit Bildaufzeichnungsfunktion nach Anspruch 2, **dadurch gekennzeichnet, dass** die Spannungsversorgung über das Kabel (8) vorgesehen ist.

5. Beobachtungssystem mit Bildaufzeichnungsfunktion nach Anspruch 1, **dadurch gekennzeichnet, dass** das Modul (6) mit der Schnittstelle der Digitalkamera (2) drahtlos, insbesondere über Bluetooth oder IEC 802.11b verbunden ist.

6. Beobachtungssystem mit Bildaufzeichnungsfunktion nach einem der Ansprüche 1 bis 5, **dadurch gekennzeichnet, dass** die Einrichtung (5) zur Auskopplung des Teillichtbündels als Strahlenteilerwürfel oder als Teilerspiegel ausgebildet ist.

## Claims

1. Observation system with image recording function, comprising:
1.1. binoculars, having
1.1.1. binocular tubes (1'), each binocular tube (1') having a beam path through an objective (3) and an eyepiece (4);
1.1.2. a device (5) for extracting a partial light beam, which is arranged in one of the binocular tubes (1'); and
1.1.3. an exchangeable and/or removable module (6) with an image sensor for converting images into digital data, which is applied on a housing of the binocular tube (1') that contains the device (5) for extracting the partial light beam so that it is possible to extract an optical signal to the image sensor; and
1.2. an independent digital camera (2) with an interface for an additional external image sensor, wherein
1.3. the module (6) is connected to the interface of the digital camera (2) so that digital image information can be transmitted via the connection and the image sensor of the module can be used as the additional external image sensor of the digital camera (2).

2. Observation system with image recording function according to Claim 1, **characterised in that** the module (6) is connected to the interface of the digital camera (2) via a cable (8).

3. Observation system with image recording function according to Claim 2, **characterised in that** the interface is designed as USB, RS 232 or IEC 1394.

4. Observation system with image recording function according to Claim 2, **characterised in that** the voltage supply is provided via the cable (8).

5. Observation system with image recording function according to Claim 1, **characterised in that** the module (6) is connected to the interface of the digital camera (2) wirelessly, in particular via Bluetooth or IEC 802.11b.

6. Observation system with image recording function according to one of Claims 1 to 5, **characterised in that** the device (4) for extracting the partial light beam is designed as a beam splitter cube or as a splitter mirror.

## Revendications

1. Système d'observation possédant une fonction d'enregistrement d'images, comprenant :
1.1. une paire de jumelles comprenant
1.1.1. des tubes de jumelles (1'), dans lequel chaque tube (1') a un chemin optique qui traverse un objectif (3) et un oculaire (4) ;
1.1.2. un dispositif (5) servant à extraire un faisceau lumineux partiel, qui est disposé dans un des tubes de jumelles (1') ; et
1.1.3. un module interchangeable et/ou amovible (6) comprenant un capteur d'images destiné à convertir des images en données numériques, qui est attaché à un corps du tube de jumelles (1'), qui renferme le dispositif (5) destiné à extraire le faisceau lumineux partiel de telle sorte qu'il est possible d'extraire un signal optique créé sur le capteur d'image ; et
1.2. une caméra numérique autonome (2) pourvue d'une interface pour un capteur d'images externe additionnel, dans laquelle
1.3. le module (6) est relié à l'interface de la caméra numérique (2) de telle manière que des informations image numériques puissent être transmises par l'intermédiaire de la liaison, et le capteur d'images du module peut être utilisé en tant que capteur d'images externe additionnel de la caméra numérique (2).

2. Système d'observation ayant une fonction d'enregistrement d'images selon la revendication 1, **caractérisé en ce que** le module (6) est relié à l'interface de la caméra numérique (2) par un câble (8).

3. Système d'observation ayant une fonction d'enregistrement d'images selon la revendication 2, **caractérisé en ce que** l'interface est constituée par une interface USB, RS 232 ou IEC 1394.

4. Système d'observation ayant une fonction d'enregistrement d'images selon la revendication 2, **caractérisé en ce que** l'alimentation en tension est prévue par l'intermédiaire du câble (8).

5. Système d'observation ayant une fonction d'enregistrement d'images selon la revendication 1, **caractérisé en ce que** le module (6) est relié par une liaison sans fil à l'interface de la caméra numérique (2), en particulier par Bluetooth ou IEC 802.11b.

6. Système d'observation ayant une fonction d'enregistrement d'images selon l'une des revendications 1 à 5, **caractérisé en ce que** le dispositif (5) servant à extraire le faisceau lumineux partiel est constitué par un bloc diviseur de faisceau ou par un miroir diviseur.
